Europäisches Patentamt

European Patent Office

Office européen des brevets

(19)

(11) Veröffentlichungsnummer : **0 098 923**

**B1**

(12) **EUROPÄISCHE PATENTSCHRIFT**

(45) Veröffentlichungstag der Patentschrift :
**12.02.86**

(21) Anmeldenummer : **83103366.7**

(22) Anmeldetag : **06.04.83**

(51) Int. Cl.⁴ : **F 27 D 13/00**, F 27 D 15/00,
F 27 D 17/00, F 27 B 7/20

(54) **Vorrichtung zur Wärmebehandlung von feinkörnigem Gut.**

(30) Priorität : **11.06.82 DE 3222131**

(43) Veröffentlichungstag der Anmeldung :
**25.01.84 Patentblatt 84/04**

(45) Bekanntmachung des Hinweises auf die Patenterteilung : **12.02.86 Patentblatt 86/07**

(84) Benannte Vertragsstaaten :
**BE CH DE FR GB IT LI SE**

(56) Entgegenhaltungen :
**DE-A- 1 433 842**
**DE-A- 2 611 239**
**DE-A- 3 014 599**
**DE-B- 1 801 362**
**DE-C- 1 292 319**

(73) Patentinhaber : **Krupp Polysius AG**
**Graf-Galen-Strasse 17**
**D-4720 Beckum (DE)**

(72) Erfinder : **Krützner, Karl**
**Rostocker Strasse 8**
**D-4720 Beckum 2 (DE)**

(74) Vertreter : **Tetzner, Volkmar, Dr.-Ing. Dr. Jur.**
**Van-Gogh-Strasse 3**
**D-8000 München 71 (DE)**

Jouve, 18, rue St-Denis, 75001 Paris, France

**Beschreibung**

Die Erfindung betrifft eine Vorrichtung entsprechend dem Oberbegriff des Anspruches 1.

Vorrichtungen dieser Art sind beispielsweise durch die DE-A-26 11 239 und 30 14 599 bekannt.

Es hat sich gezeigt, daß sich bei derartigen Vorrichtungen während des Betriebes in der Gasleitung zwischen dem Drehrohrofen und der untersten Stufe des Zyklonvorwärmers, also in der Calcinierzone, Gutansätze bilden, die teilweise wieder gelöst und durch die strömenden Gase wenigstens zu einem Teil in die unterste Zyklonstufe des Vorwärmers mitgenommen werden. In dieser untersten Zyklonstufe verstopfen die dort ausfallenden Gutansätze dann häufig in unerwünschter Weise die Zyklon-Gutausläufe, was komplizierte Reinigungsarbeiten und dadurch bedingte Stillstandszeiten (Produktionsausfall) zur Folge hat.

Zum Stand der Technik gehört weiterhin eine Vorrichtung zur Wärmebehandlung von feinkörnigem Gut (DE-C-12 92 319), bei der die Abgase des Drehrohrofens geteilt werden. Der erste Teilstrom der Ofenabgase wird in üblicher Weise dem untersten Zyklon eines mehrstufigen Zyklonvorwärmers zugeführt. Dem zweiten Teilstrom wird ein kalter, feinkörniger Stoff zugesetzt, auf dem sich die in den heißen Ofenabgasen enthaltenen Alkalien niederschlagen. Dieser zweite Teilstrom wird sodann einem Abscheider zugeleitet, in dem die feinkörnigen Stoffe mit den darauf niedergeschlagenen Alkalien abgeschieden werden. Dieser zweite Teilstrom wird dann dem Zyklonvorwärmer zugeleitet und mit dem ersten Teilstrom vermischt. Eine Calcinierzone (zur weiteren Erhitzung des vorgewärmten Gutes mittels zusätzlichen Brennstoffes vor Eintritt des Gutes in den Drehrohrofen) ist bei dieser bekannten Vorrichtung nicht vorgesehen.

Der Erfindung liegt die Aufgabe zugrunde, eine Vorrichtung der im Oberbegriff des Anspruches 1 vorausgesetzten Art in der Weise zu verbessern, daß die oben erwähnten Verstopfungen mit den dadurch bedingten Nachteilen vermieden werden.

Dies wird erfindungsgemäß durch das kennzeichnende Merkmal des Anspruches 1 gelöst.

Die erfindungsgemäße Anwendung und Ausbildung eines Grobabscheiders in dem nach unten verlaufenden Leitungsteil der von der Calcinierzone zur untersten Stufe des Zyklonvorwärmers führenden Gasleitung macht es möglich, alle in der Calcinierzone gebildeten groben Gutansätze praktisch unmittelbar vor deren Eintritt in die unterste Zyklonstufe abzufangen, so daß lediglich feinkörniges und pulverförmiges Gut in die unterste Zyklonstufe des Vorwärmers gelangen kann und somit auf grobe Gutansätze zurückzuführende Gutverstopfungen mit dadurch bedingten Reinigungsarbeiten im Bereich der Zyklongutausläufe zuverlässig vermieden werden.

Weitere Einzelheiten und Vorteile der Erfindung ergeben sich aus der folgenden Beschreibung einiger in der Zeichnung veranschaulichter Ausführungsbeispiele. In der ganz schematisch gehaltenen Zeichnung zeigen.

Figur 1 eine Stirnansicht der erfindungsgemäßen Vorrichtung mit den beiden untersten Vorwärmer-Zyklonstufen, der Calcinierzone und dem Drehrohrofen;

Figur 2 eine Seitenansicht der Ausbildung gemäß Fig. 1;

Figur 3 bis 6 vier verschiedene Detail-Schnittansichten von Ausbildungsarten für einen der untersten Zyklonstufe vorgeschalteten Grobabscheider.

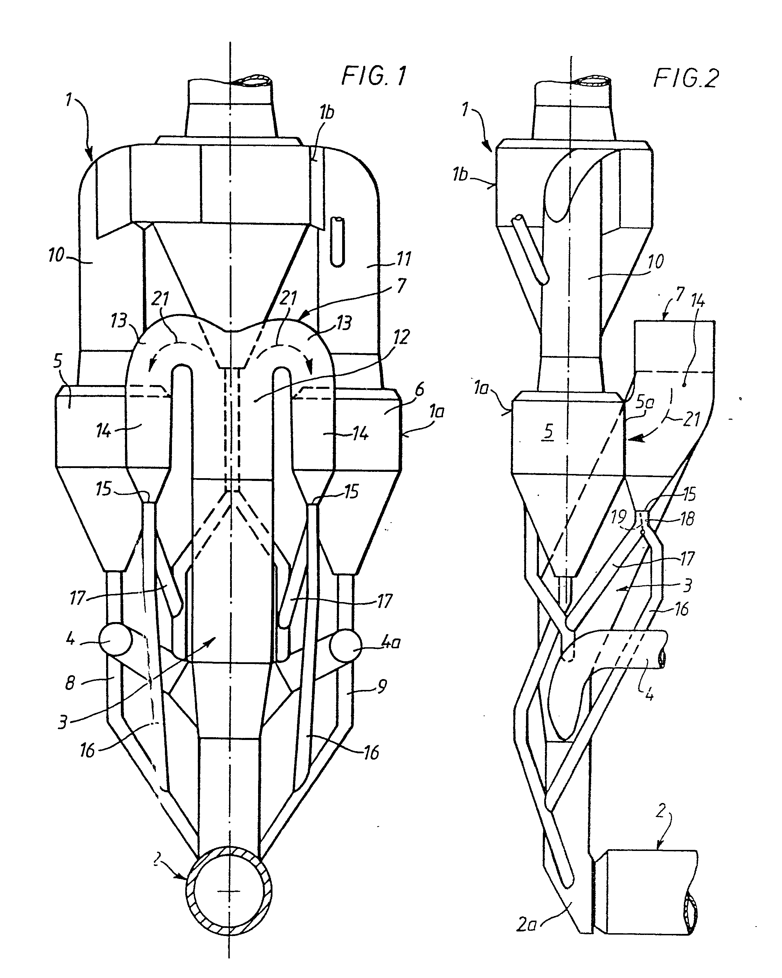

Anhand der Fig. 1 und 2 sei zunächst der allgemeine Aufbau der zur Wärmebehandlung von feinkörnigem Gut bestimmten Vorrichtung erläutert. Als feinkörniges Gut kommt insbesondere Zementrohmehl in Frage, das nach seinem Vorwärmen zunächst noch weiter erhitzt und dabei weitgehend calciniert werden soll, um dann schließlich in bekannter Weise fertiggebrannt zu werden.

Diese Wärmebehandlungsvorrichtung enthält einen mehrstufigen Zyklonvorwärmer 1 zur Vorwärmung des Gutes, einen — hier nur angedeuteten — Drehrohrofen 2, in dem das Gut fertiggebrannt wird, sowie eine Gasleitung 3, die das Einlaufgehäuse 2a des Drehrohrofens 2 mit der untersten Zyklonstufe 1a des Vorwärmers 1 verbindet, wobei in dieser Gasleitung 3 in an sich bekannter Weise eine Calcinierzone ausgebildet ist, in der das im Vorwärmer 1 vorgewärmte Gut mittels zusätzlich eingeführten Brennstoffes weiter erhitzt wird, bevor es in den Drehrohrofen 2 eintritt. In der Gasleitung 3 können daher in üblicher Weise angeordnete und ausgebildete Zuführungen für zusätzlichen Brennstoff vorgesehen sein, was jedoch nicht näher veranschaulicht ist. Im dargestellten Ausführungsbeispiel der Fig. 1 und 2 ist im Bereich des unteren Abschnittes der Gasleitung 3 ferner noch eine von einem nicht näher veranschaulichten, an sich bekannten Kühler kommende Luft- bzw. Gasleitung angeschlossen, von der lediglich zwei Zweigleitungen 4, 4a angedeutet sind.

Wie insbesondere Fig. 1 deutlich zeigt, enthält die unterste Vorwärmer-Zyklonstufe 1a zwei parallel geschaltete Zyklone 5, 6, deren Eingänge (vgl. z. B. 5a) mit dem oberen Bereich 7 der Gasleitung 3 verbunden sind; die Gutablaufleitungen 8, 9 dieser beiden untersten Zyklone 5, 6 münden in das Einlaufgehäuse 2a des Drehrohrofens 2, während die Abgasleitungen 10, 11 in üblicher Weise in die zweitunterste Stufe 1b des Zyklonvorwärmers 1 führen.

Da der obere Bereich 7 der Gasleitung 3 an beide unterste Zyklone 5, 6 angeschlossen ist, ist er in zwei etwa gleich große und gleichartig geformte Abzweigungen aufgeteilt. Auf diese Weise besitzt der obere Gasleitungsbereich 7 dieses Ausführungsbeispieles einen nach oben verlaufenden Leitungsteil 12 sowie — im Bereich jeder seiner Abzweigungen — einen Umlenkteil 13 (mit einer Umlenkung von etwa 180°) und einen nach unten verlaufenden Leitungsteil 14, der in den zugehörigen Zyklon 5 bzw. 6 der untersten Zyklonstufe 1a einmündet. Gemäß der Darstellung in Fig. 2 wird es vorgezogen, die nach unten verlaufenden Leitungsteile 14 etwa im Bereich einer Seitenwand direkt an die entsprechenden Eingänge (z. B. 5a) der zugehörigen Zyklone 5, 6 anzuschließen.

Von Bedeutung ist nun, daß der nach unten verlaufende Leitungsteil 14 des oberen Gasleitungsbereiches 7 als Grobabscheider ausgebildet ist, d. h. bei der veranschaulichten Ausführungsform sind die nach unten verlaufenden Leitungsteile 14 der beiden Abzweigungen entsprechend ausgebildet. Der durch den Leitungsteil 14 gebildete Grobabscheider besitzt — wie später noch näher erläutert wird — eine solche Form, daß mit den Drehrohrofenabgasen in den oberen Gasleitungsbereich 7 mitgenommene grobe Gutansätze (worunter auch entsprechende Agglomerate und dergleichen fallen) aus diesen Ofenabgasen ausgeschieden werden können, bevor die Ofenabgase in die untersten Zyklone 5, 6 der untersten Zyklonstufe 1a gelangen ; die Ausbildung ist dabei jedoch auch derart, daß das feinkörnige und ggf. pulverförmige übrige Behandlungsgut — wie erwünscht — in die Zyklone 5, 6 der untersten Zyklonstufe eingetragen wird, also im Grobabscheider nicht mit ausfällt.

Die Gutaustragsöffnung 15 des so gebildeten Grobabscheiders (14) kann generell so groß gewählt werden, daß die zu erwartenden groben Gutansätze auch sicher ausgetragen werden können. Diese Gutaustragsöffnung 15 des Grobabscheiders kann nun über eine Grobgutleitung 16 mit dem Einlaufgehäuse 2a des Drehrohrofens 2 — vorzugsweise über die Gutablaufleitungen 8, 9 — in Verbindung stehen, oder die Gutaustragsöffnung 15 ist über eine Grobgutleitung 17 mit der Gasleitung 3 und daher mit der Calcinierzone verbunden. Besonders vorteilhaft ist es jedoch, wenn diese beiden zuletzt genannten Verbindungsmöglichkeiten durch die Grobgutleitungen 16 und 17 gegeben sind, wobei dann unter der Gutaustragsöffnung 15 jedes Grobabscheiders zweckmäßig ein Verzweigungsrohr 18 vorgesehen und in diesem Verzweigungsrohr 18 ein Verteilerorgan 19 angeordnet ist. Als Verteilerorgan kann eine einfache Einstellklappe oder es können auch Fingerklappen vorgesehen sein. Auf diese Weise besteht die Möglichkeit, die im Grobabscheider ausgeschiedenen Grobanteile entweder direkt dem Drehrohrofen 2 oder nur der Calcinierzone (in der Gasleitung 3) zuzuführen, und es besteht darüber hinaus noch die Möglichkeit, einstellbare Anteile des im Grobabscheider abgeschiedenen Gutes zum Teil dem Drehrohrofen 2 und zum anderen Teil der Calcinierzone zuzuleiten. Die dabei der Calcinierzone zugeleiteten Grobgutanteile können dadurch im mehrfachen Umlauf einer verstärkten Calcinierung bzw. Entsäuerung unterworfen werden.

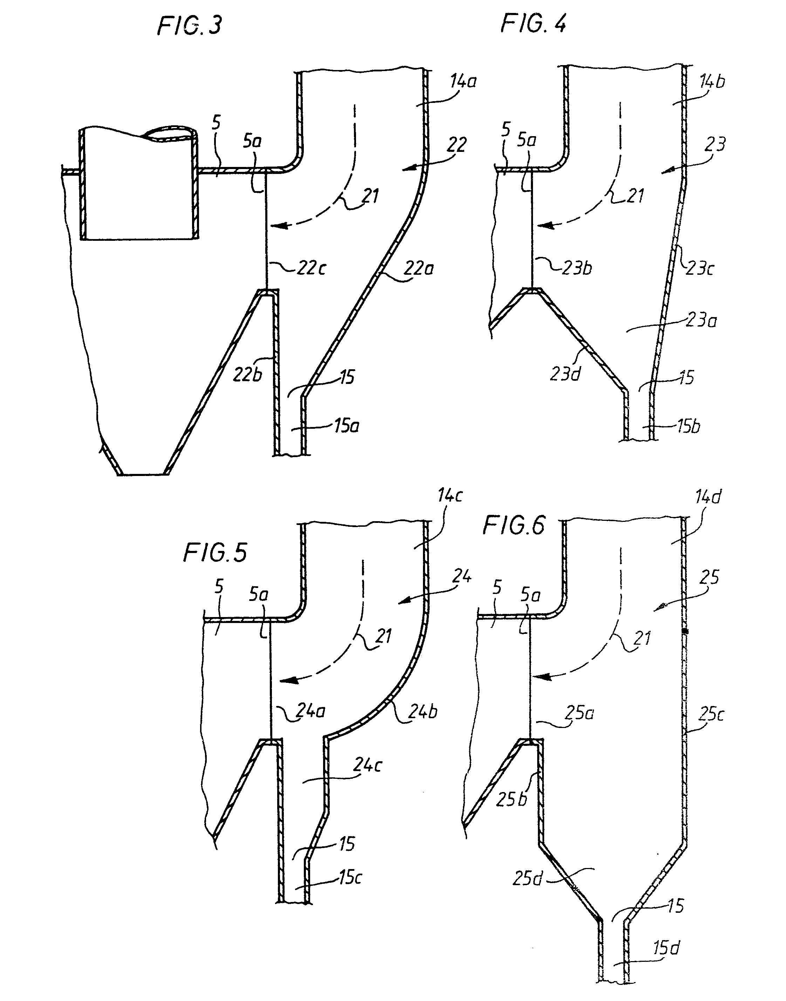

Was nun die Gestaltung eines den Grobabscheider bildenden, nach unten verlaufenden Leitungsteiles 14 anbelangt, so bestehen zahlreiche Möglichkeiten, wie sie in den Fig. 3 bis 6 in vereinfachten Teil-Vertikalschnitten einiger Beispiele veranschaulicht sind ; es sei angenommen, daß der Grobabscheider jeweils dem untersten Zyklon 5 der untersten Vorwärmer-Zyklonstufe 1a vorgeschaltet ist. In allen vier Ausführungsbeispielen sind zumindest drei im wesentlichen gleichartige gemeinsame Merkmale vorhanden : Der eigentliche Grobabscheider ist im unteren Abschnitt 14a ... 14d des nach unten verlaufenden Leitungsteiles 14 ausgebildet ; der so ausgebildete Grobabscheider besitzt eine seitliche Verbindungsöffnung, die direkt an die den Zykloneingang 5a bildende Eintrittsöffnung des untersten Zyklons 5 angeschlossen und an deren Querschnitt angepaßt ist ; eine untere Gutaustragsöffnung 15 mit Gutaustragsstutzen 15a ... 15d.

Bei dieser Ausbildung des Grobabscheiders erfolgt das Abscheiden des weiter oben erläuterten Grobgutes aus dem Gas-Gut-Gemischstrom (vgl. gestrichelte Pfeile 21) bei dessen seitlicher Umlenkung aus der etwa vertikal nach unten verlaufenden Strömungsrichtung in eine etwa horizontale Richtung (vor dem Eintritt in den entsprechenden untersten Zyklon, z. B. 5).

Fig. 3 zeigt einen Grobabscheider 22 (im unteren Abschnitt 14a des nach unten verlaufenden Leitungsteiles 14), der etwa in Form eines 45- bis 60°-Krümmers ausgeführt ist, dessen untere Außenwand 22a mit verhältnismäßig steiler Neigung schräg nach unten verläuft und mit der gegenüberliegenden, etwa senkrechten Seitenwand 22b einen einseitig schrägen, schlanken Trichterteil im wesentlichen unterhalb der seitlichen Verbindungsöffnung zum Zyklon 5 bildet.

Bei der Ausführungsform gemäß Fig. 4 ist der Grobabscheider 23 im wesentlichen durch den unteren Abschnitt 14b des nach unten verlaufenden Leitungsteiles und durch einen sich daran nach unten anschließenden Trichterteil 23a gebildet, der — der seitlichen Verbindungsöffnung 23b gegenüberliegend — eine verhältnismäßig steil geneigte Seitenwand 23c und — im Anschluß an die seitliche Verbindungsöffnung 23b nach unten — eine etwas stärker geneigte Seitenwand 23d aufweist.

Im Beispiel der Fig. 5 ist der Grobabscheider 24 durch einen den unteren Abschnitt 14c des nach unten verlaufenden Leitungsteiles darstellenden Krümmer von etwa 90° gebildet. Kurz vor dem Anschluß der seitlichen Verbindungsöffnung 24a an die Eintrittsöffnung des Zyklons 5 ist in der unteren Außenwand 24b ein nach unten gerichteter, stutzenartiger Gutauffangteil 24c mit der Gutaustragsöffnung und dem Gutaustragsstutzen 15c angeschlossen.

Fig. 6 zeigt schließlich eine Ausführungsform, bei der der untere Abschnitt 14d des nach unten verlaufenden Leitungsteiles die Form eines hohen, geraden und schlanken Behälters aufweist und damit den Grobgutabscheider 25 bildet. Die seitliche Verbindungsöffnung 25a dieses Grobgutabscheiders ist etwa im mittleren Bereich der Höhe der Seitenwand 25b angeordnet, wobei dieser Seitenwand 25b eine etwa parallel zu ihr verlaufende Seitenwand 25c gegenüberliegt. Am unteren Ende der Seitenwände 25b und 25c schließt sich ein etwa symmetrischer Trichterteil 25d mit der Gutaustragsöffnung 15 und dem Gutaustragsstutzen 15d an.

Die vorstehend erläuterten vier Ausführungsbeispiele (Fig. 3 bis 6) dürften deutlich genug unterstreichen, daß der Grobabscheider in seiner Formgebung den verschiedensten zu erwartenden Betriebs- und Verfahrensbedingungen angepaßt werden kann ; hierbei wird auch die Gutaustragsöffnung 15 jedes Grobabscheiders in ihrer Querschnittsgröße den größten zu erwartenden Grobgutabmessungen angepaßt werden. Darüber hinaus besteht in vorteilhafter Weise noch die Möglichkeit, im Auslauf- bzw. Trichterbereich eines solchen Grobabscheiders Füllstands-Überwachungseinrichtungen (z. B. Gammastrahler) anzuordnen, um evtl. auftretende Verstopfungen bereinigen zu können. Hierbei sei jedoch vermerkt, daß die Beseitigung einer evtl. auftretenden Verstopfung im Grobabscheider während des Betriebes der ganzen Wärmebehandlungsvorrichtung vorgenommen werden kann, ohne daß dadurch irgendwelche Störungen, insbesondere in der Funktion der zugehörigen Zyklone eintreten können.

Während anhand Fig. 1 ein Zyklonvorwärmer erläutert worden ist, der in seiner untersten Zyklonstufe zwei parallel geschaltete Zyklone enthält, wie es bei sog. zweisträngigen Vorwärmern der Fall ist, kann als Zyklonvorwärmer selbstverständlich auch jeder andere geeignete Typ verwendet werden, beispielsweise auch eine sog. einsträngige Ausführungsform, bei der jede Zyklonstufe dann ledigleich einen einzigen Zyklon enthält. An der Ausbildung und Gestaltung der vom Drehrohrofen-Einlaufgehäuse zur untersten Stufe des Zyklonvorwärmers führenden Gasleitung ändert sich dabei nichts. Letzteres gilt auch für eine weitere Abwandlung, nach der die Calcinierzone ohne zusätzlich vom Kühler herangeführtes Gas betrieben wird, d. h. von dem dem Drehrohrofen nachgeschalteten Kühler ist in diesem Falle keine Luft- bzw. Gasleitung an die vom Drehrohrofen-Einlaufgehäuse zur untersten Zyklonstufe führende Gasleitung herangeführt.

## Patentansprüche

1. Vorrichtung zur Wärmebehandlung von feinkörnigem Gut, enthaltend einen mehrstufigen Zyklonvorwärmer zur Vorwärmung des Gutes, einen Drehrohrofen zum Fertigbrennen des Gutes sowie eine in der Gasleitung zwischen dem Drehrohrofen und dem Zyklonvorwärmer angeordnete Calcinierzone zur weiteren Erhitzung des vorgewärmten Gutes mittels zusätzlichen Brennstoffes vor Eintritt des Gutes in den Drehrohrofen, wobei der von der Calcinierzone zur untersten Stufe des Zyklonvorwärmers führende Bereich der Gasleitung einen nach oben verlaufenden Leitungsteil, einen Umlenkteil sowie einen nach unten verlaufenden, in die unterste Zyklonstufe mündenden Leitungsteil aufweist, dadurch gekennzeichnet, daß der nach unten verlaufende Leitungsteil (14 ; 14a... 14d) als Grobabscheider (22 ; 23 ; 24 ; 25) ausgebildet ist.

2. Vorrichtung nach Anspruch 1, dadurch gekennzeichnet, daß die Gutaustragsöffnung (15) des Grobabscheiders mit dem Einlaufgehäuse (2a) des Drehrohrofens (2) in Verbindung steht.

3. Vorrichtung nach Anspruch 1, dadurch gekennzeichnet, daß die Gutaustragsöffnung (15) des Grobabscheiders mit der Calcinierzone (3) in Verbindung steht.

4. Vorrichtung nach den Ansprüchen 2 und 3, dadurch gekennzeichnet, daß die Gutaustragsöffnung (15) des Grobabscheiders über eine sich verzweigende Gutleitung (18) mit dem Einlaufgehäuse (2a) des Drehrohrofens (2) und mit der Calcinierzone (3) in Verbindung steht.

5. Vorrichtung nach Anspruch 4, dadurch gekennzeichnet, daß im Bereich der Verzweigung (18) der Gutleitung ein Verteilerorgan (19) angeordnet ist.

## Claims

1. Apparatus for heat treatment of fine-grained material, containing a multi-stage cyclone preheater for preheating material, a rotary kiln for final burning of the material and a calcination zone arranged in the gas pipe between the rotary kiln and the cyclone preheater for further heating the preheated material by means of additional fuel before the material enters the rotary kiln, in which the gas pipe leading from the calcination zone to the lowest stage of the cyclone preheater has an upwardly extending pipe section, a deflector section and a downwardly extending pipe section which opens into the lowest cyclone stage, characterised in that the downwardly extending pipe section (14 ; 14a... 14d) is constructed as a coarse grain separator (22 ; 23 ; 24 ; 25).

2. Apparatus as claimed in claim 1, characterised in that the material discharge opening (15) of the coarse grain separator is connected to the inlet housing (2a) of the rotary kiln (2).

3. Apparatus as claimed in claim 1, characterised in that the material discharge opening (15) of the coarse grain separator is connected to the calcination zone (3).

4. Apparatus as claimed in claims 2 and 3, characterised in that the material discharge opening (15) of the coarse grain separator is connected via a branched material pipe (18) to the inlet housing (2a) of the rotary kiln (2) and to the calcination zone (3).

5. Apparatus as claimed in claim 4, characterised in that a distributor (19) is arranged in the region (18) where the material pipe branches.

## Revendications

1. Dispositif de traitement thermique de matière à granulométrie fine, comprenant un réchauffeur à cyclones à plusieurs étages destiné à la matière, un four tubulaire rotatif destiné à l'achèvement de la cuisson de la matière, ainsi qu'une zone de calcination située dans la conduite des gaz entre le four tubulaire et le réchauffeur à cyclones et destinée à poursuivre le chauffage le produit réchauffé au moyen d'un complément de combustible avant son entrée dans le four tubulaire, la partie de la conduite des gaz menant de la zone de calcination à l'étage inférieur du réchauffeur à cyclones comprenant une section orientée vers le haut, une section d'inversion du sens de la circulation ainsi qu'une section orientée vers le bas et débouchant dans l'étage inférieur des cyclones, dispositif caractérisé en ce que la section de conduite orientée vers le bas (14 ; 14a... 14d) est conformée en séparateur des gros grains (22 ; 23 ; 24 ; 25).

2. Dispositif selon la revendication 1, caractérisé en ce que l'orifice de décharge de la matière (15) du séparateur des gros grains communique avec l'enveloppe d'entrée (2a) du four tubulaire rotatif (2).

3. Dispositif selon la revendication 1, caractérisé en ce que l'orifice de décharge de la matière (15) du séparateur des gros grains communique avec la zone de calcination (3).

4. Dispositif selon les revendications 2 et 3, caractérisé en ce que l'orifice de décharge de la matière (15) du séparateur des gros grains communique par une conduite (18) formant des embranchements avec l'enveloppe d'entrée (2a) du four tubulaire rotatif (2) et avec la zone de calcination (3).

5. Dispositif selon la revendication 4, caractérisé en ce qu'un organe distributeur (19) est disposé à l'embranchement (18) de la conduite de décharge de la matière.

FIG. 1

FIG. 2

FIG.3

FIG. 4

FIG.5

FIG.6

2